# EUROPEAN PATENT APPLICATION

(11) **EP 4 164 039 A1**
(43) Date of publication of application: **12.04.2023**
(21) Application number: 22791872.9
(22) Date of filing: 03.03.2022
(51) Int. Cl.: H01M 50/211, H01M 50/24

(54) **BATTERY PACK AND DEVICE INCLUDING SAME**

(30) Priority: 20.04.2021 KR 20210051387
(71) Applicant: LG Energy Solution, Ltd., Seoul 07335 (KR)
(72) Inventor: SHIN, Juhwan, Daejeon 34122 (KR); RHIM, Soeun, Daejeon 34122 (KR); KIM, Donghyun, Daejeon 34122 (KR); LEE, Hyoungsuk, Daejeon 34122 (KR)
(74) Representative: Plasseraud IP
(86) International application number: PCT/KR2022/003010
(87) International publication number: WO 2022/225172

(57) **Abstract**

A battery pack according to an embodiment of the present disclosure includes battery modules including a plurality of battery cells; and a pack frame for housing the battery modules. Within the pack frame, the battery modules are arranged in a multiple row and single layer structure, and at least two of the battery modules are arranged in a row along the first direction to form battery module groups. A partition wall member is located between any one battery module group and another battery module group, and the partition wall member extends along the first direction.

## Description

### [TECHNICAL FIELD]

### Cross Citation with Related Application(s)

This application claims the benefit of Korean Patent Application No. 10-2021-0051387 filed on April 20, 2021 with the Korean Intellectual Property Office, the content of which is incorporated herein by reference in its entirety.

The present disclosure relates to a battery pack and a device including the same, and more particularly, to a battery pack having improved safety at the occurrence of flames and a device including the same.

### [BACKGROUND ART]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate, each being coated with the positive electrode active material and the negative electrode active material, are arranged with a separator being interposed between them, and a battery case which seals and houses the electrode assembly together with an electrolyte solution.

Generally, the lithium secondary battery may be classified based on the shape of the exterior material into a can type secondary battery in which the electrode assembly is built into a metal can, and a pouch-type secondary battery in which the electrode assembly is built into a pouch of an aluminum laminate sheet.

In the case of a secondary battery used for small-sized devices, two to three battery cells are arranged, but in the case of a secondary battery used for a middle or large-sized device such as an automobile, a battery module in which a large number of battery cells are electrically connected is used. In such a battery module, a large number of battery cells are connected to each other in series or parallel to form a cell assembly, thereby improving capacity and output. In addition, one or more battery modules can be mounted together with various control and protection systems such as a BMS (battery management system) and a cooling system to form a battery pack.

In a battery module configured to gather a plurality of battery cells, heat generated from the large number of battery cells can be added up in a narrow space, so that the temperature can rise more quickly and excessively. In other words, battery modules in which a large number of battery cells are stacked and a battery pack equipped with these battery modules can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since a plurality of battery modules are concentratedly arranged to increase the mileage of the vehicle, a thermal runaway phenomenon generated in one battery module can easily propagate to an adjacent battery module, which may eventually lead to ignition or explosion of the battery pack itself.

Therefore, there is a need to design a model that does not lead to fire or explosion of the battery pack itself, even if a thermal runaway phenomenon occurs in any one of the battery cells

### [DETAILED DESCRIPTION OF THE INVENTION]

### [Technical Problem]

It is an object of the present disclosure to provide a battery pack that can prevent a thermal runaway phenomenon from leading to fire or explosion even if the thermal runaway phenomenon occurs in any one of the battery cells, and a device including the same.

However, the problem to be solved by the embodiments of the present disclosure is not limited to the above-described problems, and can be variously expanded within the scope of the technical idea included in the present disclosure.

### [Technical Solution]

A battery pack according to one embodiment of the present disclosure includes battery modules including a plurality of battery cells; and a pack frame for housing the battery modules. Within the pack frame, the battery modules are arranged in a multiple row and single layer structure, and at least two of the battery modules are arranged in a row along the first direction to form battery module groups. A partition wall member is located between any one battery module group and another battery module group, and the partition wall member extends along the first direction.

The battery cells may be stacked along the first direction while one surface of the cell body of the battery cell stands upright so as to be perpendicular to one surface of the bottom part of the pack frame.

The battery cell may be a pouch-type battery cell.

The battery pack may further include a connection member that connects the any one battery module group and the another battery module group.

A space in which the connection member is located may be provided on one side or both sides of the partition wall member, and a sealing member may be arranged in the space where the connection member is located.

The battery module group may include a first battery module group, a second battery module group and a third battery module group, and within each of the first battery module group, the second battery module group and the third battery module group, the battery modules may be arranged in a row along the first direction.

Within the pack frame, the first battery module group, the second battery module group and the third battery module group may be arranged along a second direction perpendicular to the first direction.

The partition wall member may include a first partition wall member and a second partition wall member, wherein the first partition wall member may be located between the first battery module group and the second battery module group, and the second partition wall member may be located between the second battery module group and the third battery module group.

A first opening for connecting a space of the first battery module group and a space of the second battery module group may be formed on one side of the first partition wall member, and a second opening for connecting a space of the second battery module group and a space of the third battery module group may be formed on one side of the second partition wall member.

The first opening and the second opening may be located on opposite sides to each other with respect to the first direction.

Due to the partition wall member, any one battery module may face one or two battery modules.

### [Advantageous Effects]

According to embodiments of the present disclosure, even if a thermal runaway phenomenon occurs in any one of the battery cells, it is designed so that a thermal propagation is sequentially performed, thereby capable of preventing fire or explosion in a battery pack unit.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view showing a battery module and a connection member according to an embodiment of the present disclosure;
Fig. 2 is an exploded perspective view of the battery module of Fig. 1;
Fig. 3 is a perspective view of a battery cell included in the battery module of Fig. 2;
Fig. 4 is a perspective view which shows a battery module and a connection member according to another embodiment of the present disclosure;
Fig. 5 is an exploded perspective view of the battery module of Fig. 4;
Fig. 6 is a plan view which shows a battery pack according to an embodiment of the present disclosure;
Fig. 7 is a plan view which schematically illustrates a state in which a thermal runaway phenomenon occurs in any one of the battery cells in the battery pack of Fig. 6;
Fig. 8 is a plan view which shows a battery pack according to a modified embodiment of the present disclosure;
Fig. 9 is a plan view which shows a battery pack according to another embodiment of the present disclosure; and
Fig. 10 is a plan view which schematically illustrates a state in which a thermal runaway phenomenon occurs in any one of the battery cells in the battery pack of Fig. 9.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

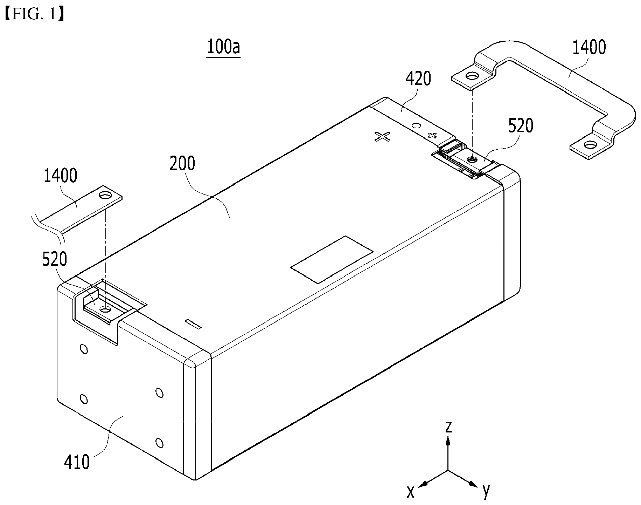

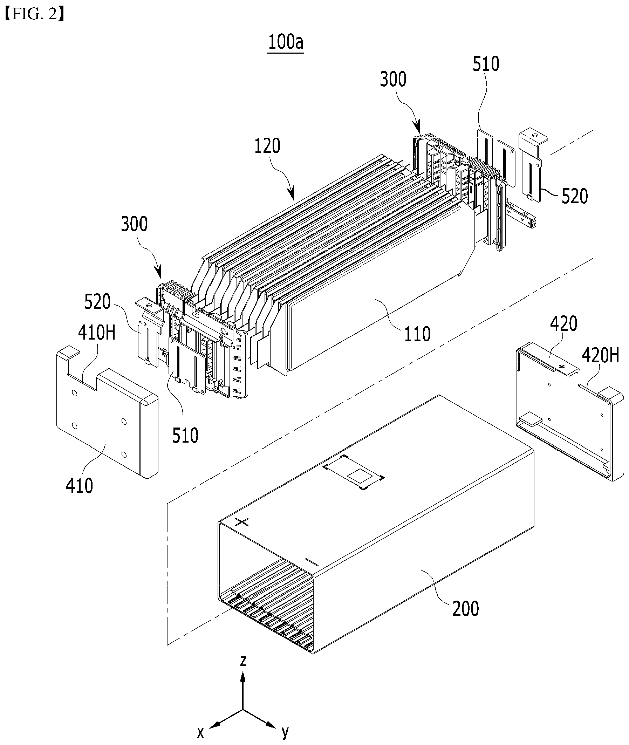

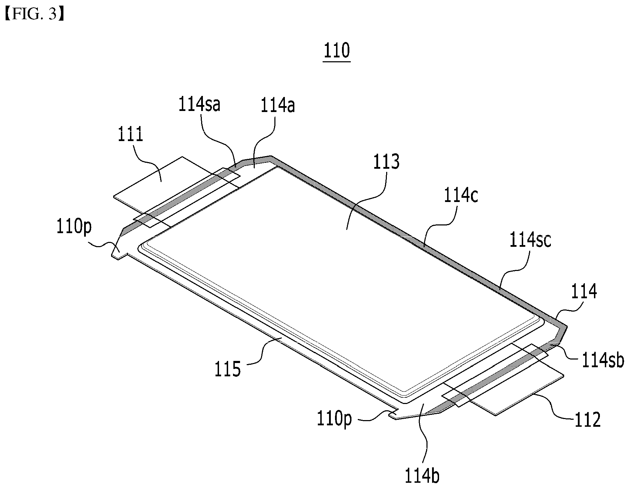

Fig. 1 is a perspective view showing a battery module and a connection member according to an embodiment of the present disclosure. Fig. 2 is an exploded perspective view of the battery module of Fig. 1. Fig. 3 is a perspective view of a battery cell included in the battery module of Fig. 2.

Referring to Figs. 1 to 3, the battery module 100a according to an embodiment of the present disclosure includes a plurality of battery cells 110. The battery cell 110 is preferably a pouch-type battery cell, and can be formed in a rectangular sheet-like structure. For example, the battery cell 110 according to the present embodiment has a structure in which two electrode leads 111 and 112 face each other and protrude from one end part and the other end part, respectively.

In particular, referring to Fig. 3, the battery cell 110 according to the present embodiment has a structure in which the two electrode leads 111 and 112 face each other and protrude from one end part 114a and the other end part 114b of the cell body 113, respectively. More specifically, the electrode leads 111 and 112 are connected to an electrode assembly (not shown) and protrude from the electrode assembly (not shown) to the outside of the battery cell 110.

Meanwhile, the battery cell 110 can be produced by joining both end parts 114a and 114b of a cell case 114 and one side part 114c connecting them in a state in which an electrode assembly (not shown) is housed in a cell case 114. In other words, the battery cell 110 according to the present embodiment has a total of three sealing parts 114sa, 114sb and 114sc, the sealing parts 114sa, 114sb and 114sc have a structure that is sealed by a method such as heat-sealing, and the remaining other side part may be composed of a connection part 115. The cell case 114 may be composed of a laminate sheet including a resin layer and a metal layer.

In addition, the connection part 115 may extend long along one edge of the battery cell 11, and a protrusion 110p of the battery cell 110 called a bat-ear can be formed at an end part of the connection part 115. However, the protrusion 110p is an exemplary structure, and the battery cell 110 according to another embodiment of the present disclosure may have a shape in which the protrusion is not formed and the connection part 115 extends in a straight line.

In Fig. 3, only the battery cell 110 having a structure in which the electrode leads 111 and 112 protrude in both directions has been described, but in another embodiment of the present disclosure, it goes without saying that a unidirectional pouch-type battery cell in which electrode leads protrude together in one direction is also possible.

The battery cell 110 may be configured by a plurality of numbers, and the plurality of battery cells 110 may be stacked so as to be electrically connected to each other, thereby forming a battery cell stack 120. Particularly, as shown in Fig. 2, the plurality of battery cells 110 can be stacked along a direction parallel to the y-axis. Thereby, one electrode lead 111 of the battery cells 110 may be protruded toward the x-axis direction, and another electrode lead 112 may be protruded toward the -x-axis direction.

The battery cell stack 120 may be housed in the module frame 200. The module frame 200 may be a metal frame having a form in which both surfaces are opened. More specifically, the module frame 200 may be opened in both directions in which the electrode leads 111 and 112 protrude with reference to the battery cell stack 120. However, the module frame 200 shown in Fig. 2 is an exemplary structure, and the form thereof is not particularly limited as long as it can house the battery cell stack 120. For example, a form in which an upper cover is joined to a U-shaped frame with an opened upper part, a form in which a U-shaped frame and an inverted U-shaped frame are coupled with each other, or the like are possible.

End plates 410 and 420 may be located on the opened both surfaces of the module frame 200. The two end plates 410 and 420 are referred to as a first end plate 410 and a second end plate 420, respectively. The end plates 410 and 420 may cover the opened both surfaces of the module frame 200, respectively. The battery cell stack 120 is housed in the space formed by the module frame 200 and the end plates 410 and 420, thereby capable of physically protecting the battery cell stack 120. For this purpose, the module frame 200 and the end plates 410 and 420 may include a metal material having a predetermined strength such as aluminum or a plastic material. Meanwhile, the module frame 200 and the end plates 410 and 420 can be joined by a welding method in a state in which the corresponding corner portions are in contact with each other. However, this is an exemplary method, and bolt fastening, hook fastening, or the like may be applied as the mechanical coupling form.

Meanwhile, the battery module 100a according to the present embodiment may further include a busbar frame 300 on which a busbar 510 and a terminal busbar 520 are mounted.

The busbar 510 and the terminal busbar 520 may be joined to the electrode leads 111 and 112 of the battery cells 110 in order to electrically connect the plurality of battery cells 110. Specifically, the busbar frame 300 on which the busbar 510 and the terminal busbar 520 are mounted may be located on one side (x-axis direction) and the other side (-x-axis direction) of the battery cell stack 120, respectively. One side (x-axis direction) and the other side (-x-axis direction) of the battery cell stack 120 correspond to surfaces in the direction in which the electrode leads 111 and 112 of the battery cells 110 protrude. In other words, any one busbar frame 300 may be located between any one of the end plates 410 and 420 and the battery cell stack 120.

A lead slit is formed in the busbar frame 300, and the electrode leads 111 and 112 are bent after passing through the lead slit and can be joined to the busbar 510 or the terminal busbar 520. If physical and electrical connection is possible, the joining method is not particularly limited, and weld-joining can be performed as an example.

Meanwhile, a part of the terminal busbar 520 may be exposed to the outside of the battery module 100a. Specifically, a first terminal busbar opening 410H is formed in the first end plate 410 to expose a part of the terminal busbar 520, and a second terminal busbar opening 420H may be formed in the second end plate 420 to expose a part of the terminal busbar 520. A part of the exposed terminal busbar 520 is connected to another battery module or BDU (Battery Disconnect Unit) or the like to be joined with a connection member 1400 for the formation of a high voltage (HV) connection, as shown in Fig. 1. That is, the battery module 100a may be connected to another battery module or a battery disconnect unit (BDU) through the connecting member 1400. Here, the HV connection is a connection that serves as a power source for supplying power, and means a connection between battery cells or a connection between battery modules.

The connection member 1400 is not particularly limited in its material as long as it can be electrically connected, and a metal material can be applied.

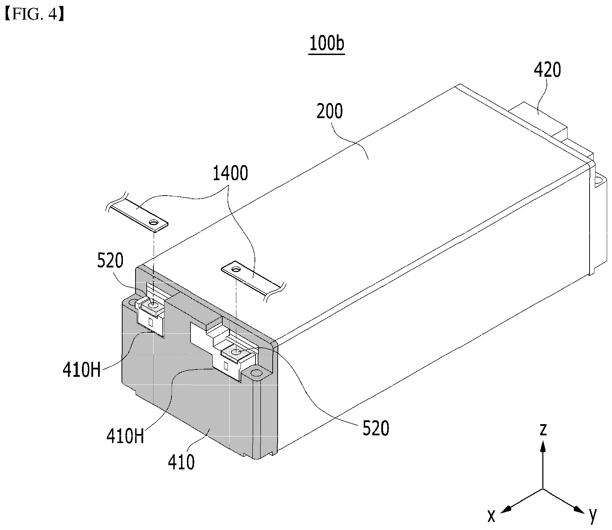

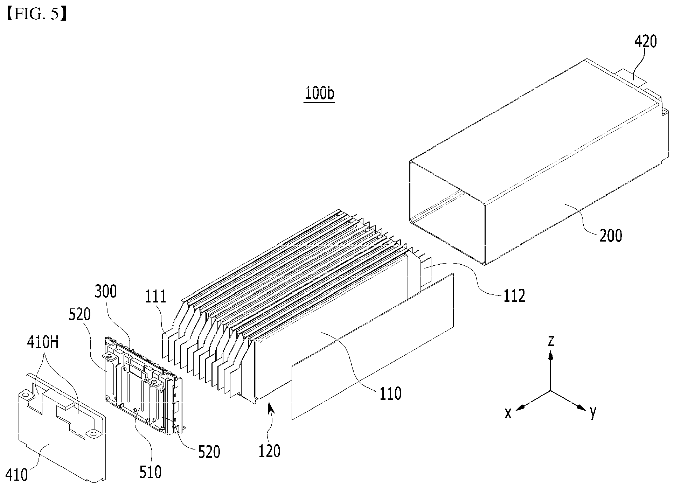

Next, the battery module 100b according to another embodiment of the present disclosure will be described in detail with reference to Figs. 4 and 5.

Fig. 4 is a perspective view which shows a battery module and a connection member according to another embodiment of the present disclosure. Fig. 5 is an exploded perspective view of the battery module of Fig. 4.

Referring to Figs. 4 and 5, the battery module 100b according to another embodiment of the present disclosure includes a battery cell stack 120 in which a plurality of battery cells 110 are stacked, a module frame 200, first and second end plates 410 and 420, and a busbar frame 300.

The details of the battery cell stack 120, the module frame 200 and the first and second end plates 410 and 420 will be omitted because they are overlapped with the battery module 100a described above.

The busbar frame 300 may be located on one side (x-axis direction) and the other side (-x-axis direction) of the battery cell stack 120, respectively. One side (x-axis direction) and the other side (-x-axis direction) of the battery cell stack 120 correspond to the directions in which the electrode leads 111 and 112 of the battery cells 110 protrude. However, illustration of the busbar frame located on the other side (-x-axis direction) of the battery cell stack 120 in Fig. 5 is omitted.

A busbar 510 and a terminal busbar 520 may be located on the busbar frame 300 that is located on the one side of the battery cell stack 120. However, the two terminal busbars 520 may be located on the busbar frame 300 that is located on the one side of the battery cell stack 120. Therefore, only the busbar is located on the busbar frame (not shown) that is located on the other side of the battery cell stack 120, and the terminal busbar is not located.

Therefore, two first terminal busbar openings 410H may be formed in the first end plate 410, and each of the two terminal busbars 520 may be exposed to the outside through the first terminal busbar openings 410H. A connection member 1400 for HV connection may be joined to each of the exposed terminal busbars 520.

That is, the difference between the battery modules 100a and 100b described above is that the positions of the terminal busbar 520 and the connection member 1400 are different. Specifically, the battery module 100a shown in Figs. 1 and 2 is configured such that two terminal busbars 520 are located on opposite sides to each other with respect to the battery cell stack 120, and the connection member 1400 is also located on opposite sides facing each other. Meanwhile, the battery module 100b shown in Figs. 4 and 5 is configured such that the two terminal busbars 520 are located on the same side with respect to the battery cell stack 120, and the connection member 1400 is also located on the same side.

The battery module 100a shown in Figs. 1 and 2 and the battery module 100b shown in Figs. 4 and 5 show exemplary structures of a battery module that can be included in a battery pack according to an embodiment of the present disclosure.

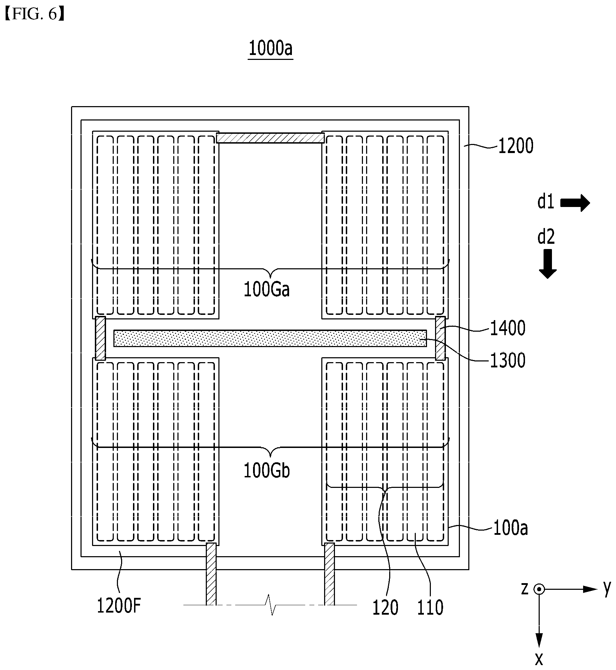

Next, the battery pack 1000a according to an embodiment of the present disclosure will be described in detail with reference to Fig. 6.

Fig. 6 is a plan view which shows a battery pack according to an embodiment of the present disclosure. Specifically, the state viewed along the -z-axis direction on the xy plane is illustrated. Here, the xy plane may be a plane parallel to the ground.

Referring to Fig. 6, a battery pack 1000a according to an embodiment of the present disclosure includes battery modules 100a including a plurality of battery cells 110 and a pack frame 1200 for housing the battery modules 100a. In the present embodiment, the battery modules 100a may be the battery modules 100a shown in Figs. 1 and 2. In Fig. 6, the battery cells 110 included in the battery modules 100a are schematically shown by dotted lines for convenience of explanation. Further, the connection member 1400 is schematically illustrated, unlike Figs. 1 and 4.

The battery modules 100a may be arranged on the bottom part 1200F of the pack frame 1200, and the battery modules 100a are arranged in a multiple row and single layer structure in the pack frame 1200. Additionally, at least two battery modules 100a are arranged in a row along the first direction d1 to form the battery module groups 100Ga and 100Gb. For example, within the pack frame 1200, the battery modules 100a may be arranged in two rows as shown in Fig. 6. A plurality of battery modules 100a are arranged in a row along the first direction d1 to form any one battery module group 100Ga, and a plurality of other battery modules 100a may be arranged in a row along the first direction d1 to form another battery module group 100Gb.

Further, the battery modules 100a are arranged in a single layer structure rather than a multiple layer structure along the height direction (z-axis direction).

The battery module groups 100Ga and 100Gb may be arranged along a second direction d2 perpendicular to the first direction d1. The first direction d1 and the second direction d2 are directions parallel to the ground or one surface of the bottom part 1200F of the pack frame 1200, that is, directions parallel to the xy plane.

A partition wall member 1300 is located between any one battery module group 100Ga and another battery module group 100Gb, and the partition wall member 1300 extends along the first direction d1. That is, one battery module group 100Ga and another battery module group 100Gb are spatially separated by the partition wall member 1300 within the pack frame 1200.

Referring to Fig. 6 together with Fig. 3, the battery cells 110 may be stacked along the first direction d1 while one surface of the cell body 113 of the battery cell 110 stands upright so as to be perpendicular to one surface of the bottom part 1200F of the pack frame 1200. That is, within the battery module groups 100Ga and 100Gb, the direction in which the battery modules 100a are arranged and the direction in which the battery cells 110 are stacked may be coincide with each other.

Next, the advantages of the battery pack 1000a according to the present embodiment when a thermal runaway phenomenon occurs in any one of the battery cells will be described with reference to Figs. 3, 6 and 7.

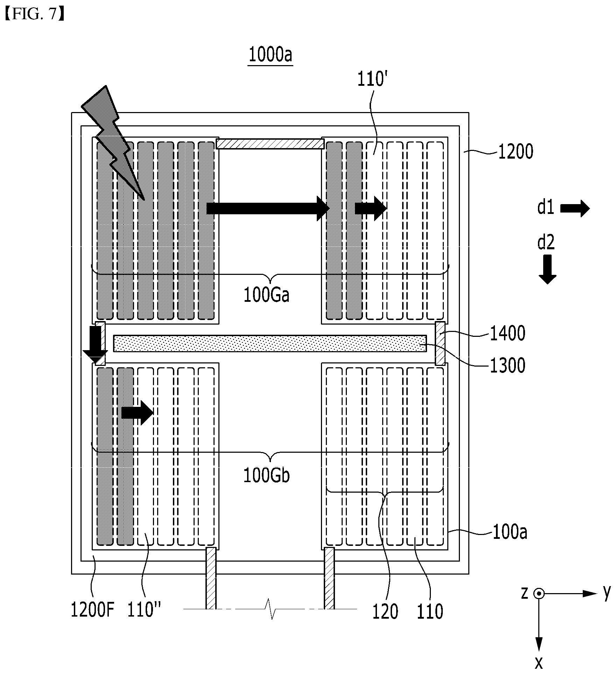

Fig. 7 is a plan view which schematically illustrates a state in which a thermal runaway phenomenon occurs in any one of the battery cells in the battery pack of Fig. 6.

Referring to Figs. 3, 6 and 7, a thermal runaway phenomenon may occur in any one of the battery cells 110 included in the battery pack 1000a according to the present embodiment. One example of a thermal runaway phenomenon is as follows. Physical, thermal, and electrical damage to the battery cell 110 including overcharging may occur, thereby increasing the internal pressure of the battery cell 110. When the fusion strength limit value of the cell case 114 of the battery cell 110 is exceeded, high-temperature heat, venting gas, and the like generated in the battery cell 110 may be ejected to the outside of the battery cell 110.

The thermal runaway phenomenon occurring in one battery cell can be expanded to other battery cells due to the convection effect, and further can be expanded to other battery modules. Particularly, due to the structure of the battery pack in which the battery modules are densely packed in order to increase the space utilization rate, the thermal runaway phenomenon does not propagate sequentially to the battery modules, but the thermal runaway phenomenon may occur simultaneously and frequently in multiple densely packed battery modules. That is, the thermal runaway phenomenon that starts from a battery cell and simultaneously expands to several battery modules leads to ignition and explosion of the battery pack itself, which is a serious problem.

However, in the battery pack 1000a according to the present embodiment, the partition wall member 1300 is arranged between the battery module groups 100Ga and 100Gb, and the battery modules 100a are arranged in a row within the battery module groups 100Ga and 100Gb, so that the propagation of the thermal runaway phenomenon is sequentially performed not only in the unit of the battery module 100a but also in the unit of the battery cell 110. That is, as shown in Fig. 7, when a thermal runaway phenomenon occurs in any one of the battery cells inside the left battery module of any one battery module group 100Ga, the venting gas and heat may be sequentially propagated to the adjacent battery cells 110. As an example, Fig. 7 shows state in which the thermal runaway phenomenon is propagated to the battery cells 110' of one battery module group 100Ga and the battery cells 110" of another battery module group 100Gb.

Further, the venting gas and heat cannot be immediately propagated to another battery module group 100 Gb by the partition wall member 1300, and between the battery module groups 100Ga and 100Gb, the venting gas and heat may be propagated to the space in which the connection member 1400 is located.

In the present embodiment, a heat insulation structure is designed so that the thermal runaway phenomenon does not propagate beyond the HV connection order of the connection member 1400 between the battery module groups 100Ga and 100Gb.

By designing such that sequential propagation is performed in this way, it is possible to increase the time for venting gas and heat to propagate, and in the process of sequential propagation, the intensity of thermal runaway may gradually decrease or may not be further strengthened. That is, the battery pack 1000a according to the present embodiment can prevent the battery pack 1000a itself from leading to ignition or explosion even if a thermal runaway phenomenon occurs in any of the battery cells 110. If there is no partition wall member 1300, the thermal runaway phenomenon started in one battery cell 110 is immediately propagated to the battery module 100a in another battery module group 100Gb, so that a large amount of venting gas and high-temperature heat from several battery modules 100a can be discharged for a short period of time. This is highly likely to lead to ignition and explosion of the battery pack 1000a.

Meanwhile, as described above, according to the present embodiment, within the battery module group 100Ga and 100Gb, the direction in which the battery modules 100a are arranged and the direction in which the battery cells 110 are stacked may coincide with each other. Thereby, within the battery module groups 100Ga and 100Gb, the propagation of the thermal runaway phenomenon between the battery cells 110 can also be sequentially performed. By allowing the arrangement direction of the battery modules 100a and the stacking direction of the battery cells 110 to coincide, an attempt was made to further delay the propagation of the thermal runaway phenomenon.

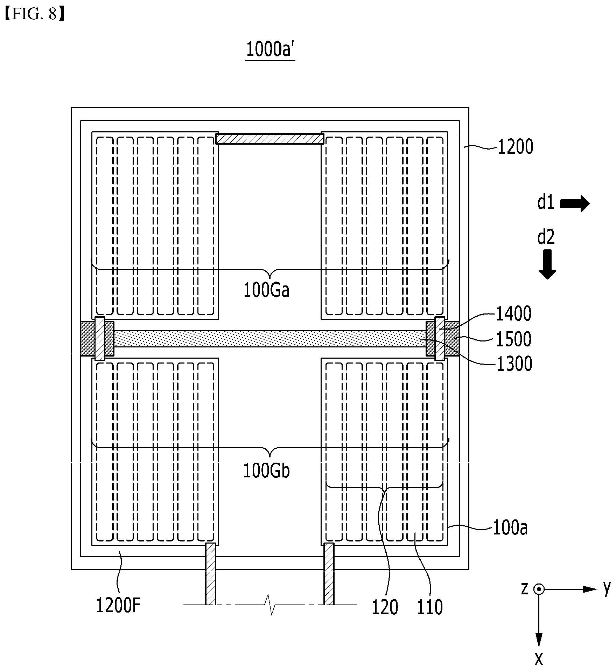

Fig. 8 is a plan view which shows a battery pack according to a modified embodiment of the present disclosure.

Referring to FIG. 8, a battery pack 1000a' according to a modified embodiment of the present disclosure may include battery module groups 100Ga and 100Gb, a partition wall member 1300, a connection member 1400, and a sealing member 1500. The battery pack 1000a' according to the present embodiment can be applied to a structure similar to or the same as that of the battery pack 1000a described above except for the sealing member 1500.

One battery module group 100Ga and another battery module group 100Gb may be connected by a connection member 1400. A space in which the connection member 1400 is located may be provided on one side or both sides of the partition wall member 1300. Fig. 8 shows a state in which a space in which the connection member 1400 are located are provided on both sides of the partition wall member 1300.

The sealing member 1500 according to the present embodiment may be arranged in a space in which the connection member 1400 is located, and may include a material having heat resistance. According to the present embodiment, it can be designed so that the sealing member 1500 is arranged so as to fill the space in which the connection member 1400 is located, and thus, propagation of the venting gas and heat between the battery module groups 100Ga and 100Gb is restricted.

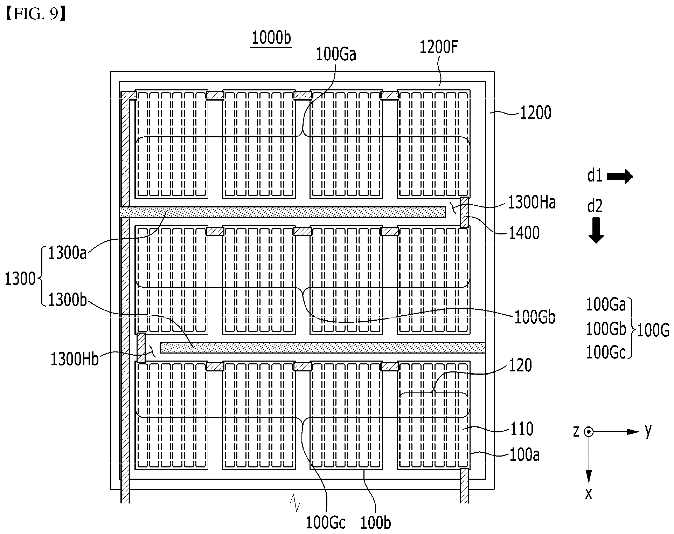

Next, the battery pack 1000b according to another embodiment of the present disclosure will be described in detail with reference to Fig. 9.

Fig. 9 is a plan view which shows a battery pack according to another embodiment of the present disclosure.

Referring to Fig. 9, a battery pack 1000b according to another embodiment of the present disclosure may include battery modules 100a and 100b including a plurality of battery cells 110 and a pack frame 1200 for housing the battery modules 100a and 100b. The plurality of battery modules 100a and 100b are arranged in a row along the first direction d1 to form the battery module group 100G. In the present embodiment, the battery modules 100a and 100b may include the battery module 100a shown in Figs. 1 and 2 and the battery module 100b shown in Figs. 4 and 5. In Fig. 9, the battery cells 110 included in each of the battery modules 100a and 100b are schematically shown by dotted lines for convenience of explanation. Further, the connection member 1400 is schematically illustrated, unlike Figs. 1 and 4.

At this time, the battery module group 100G may include a first battery module group 100Ga, a second battery module group 100Gb, and a third battery module group 100Gc. In each of the first to third battery module groups 100Ga, 100Gb, and 100Gc, at least two battery modules 100a and 100b may be arranged in a row along the first direction d1.

Within the pack frame 1200, the first to third battery module groups 100Ga, 100Gb, and 100Gc can be arranged along a second direction d2 perpendicular to the first direction d1. As described above, the first direction d1 and the second direction d2 are directions parallel to one surface of the ground or the bottom part 1200F of the pack frame 1200, that is, a direction parallel to the xy plane.

Meanwhile, the battery pack 1000b according to the present embodiment may include a partition wall member 1300. The partition wall member 1300 may include a first partition wall member 1300a and a second partition wall member 1300b. A first partition wall member 1300a may be located between the first battery module group 100Ga and the second battery module group 100Gb, and a second partition wall member 1300b may be located between the second battery module group 100Gb and the third battery module group 100Gc. The first partition wall member 1300a and the second partition wall member 1300b may extend along the first direction d1. The first to third battery module groups 100Ga, 100Gb and 100Gc are spatially separated by a first partition wall member 1300a and a second partition wall member 1300b.

Further, a first opening 1300Ha for connecting a space of the first battery module group 100Ga and a space of the second battery module group 100Gb can be formed on one side of the first partition wall member 1300a, and a second opening 1300Hb for connecting a space of the second battery module group 100Gb and a space of the third battery module group 100Gc may be formed on one side of the second partition wall member 1300b. At this time, the first opening 1300Ha and the second opening 1300Hb may be located on opposite sides to each other in the first direction d1. In one example, as shown in Fig. 9, the first opening 1300Ha may be formed at the rightmost side, and the second opening 1300Hb may be formed at the leftmost side. Meanwhile, in the case of the first partition wall member 1300a, a hole may be formed so that one of the connection members 1400 can pass through.

Due to the partition wall member 1300, any one of the battery modules 100a and 100b may face one or two battery modules 100a and 100b. Specifically, based on any one of the battery modules groups 100Ga, 100Gb and 100Gc, the outermost battery modules face only one battery module, and the inner battery modules face the left and right two battery modules.

Meanwhile, the battery modules 100a and 100b inside the pack frame 1200 are electrically connected to each other by a connection member 1400. The connection member 1400 connecting the battery module groups 100Ga, 100Gb and 100Gc can pass through the first opening 1300Ha and the second opening 1300Hb. That is, the connection member 1400 for connecting the battery module 100a of the first battery module group 100Ga and the battery module 100b of the second battery module group 100Gb passes through the first opening 1300Ha, and the connection member 1400 for connecting the battery module 100a of the second battery module group 100Gb and the battery module 100b of the third battery module group 100Gc can pass through the second opening 1300Hb.

That is, the HV connection line through the connection member 1400 between the battery modules 100a and 100b inside the pack frame 1200 may be connected in a row. To realize these HV connection lines, the battery modules in the battery pack 1000b according to the present embodiment may include both the battery module 100a illustrated in Figs. 1 and 2 and the battery module 100b illustrated in Figs. 4 and 5. In one example, as shown in Fig. 9, the rightmost battery module of the first battery module group 100Ga, the leftmost battery module of the second battery module group 100Gb, and the rightmost battery module of the third battery module group 100Gc are the battery modules 100a shown in Figs. 1 and 2, and the remaining battery module may be the battery module 100b shown in Figs. 4 and 5. However, this is an exemplary structure, and the shape and arrangement of the battery module are not particularly limited as long as it is possible to implement the above-mentioned HV connection line that extends in a row.

Meanwhile, the battery cells 110 may be stacked along the first direction d1 while one surface of the cell body 113 of the battery cell 110 stands upright to one surface of the bottom 1200F of the pack frame 1200. That is, the direction in which the battery modules 100a and 100b are arranged in the battery module group 100Ga, 100Gb, 100Gc can coincide with the direction in which the battery cells 110 are stacked.

Next, the advantages of the battery pack 1000b according to the present embodiment when a thermal runaway phenomenon occurs in any one of the battery cells will be described with reference to Figs. 3, 9 and 10.

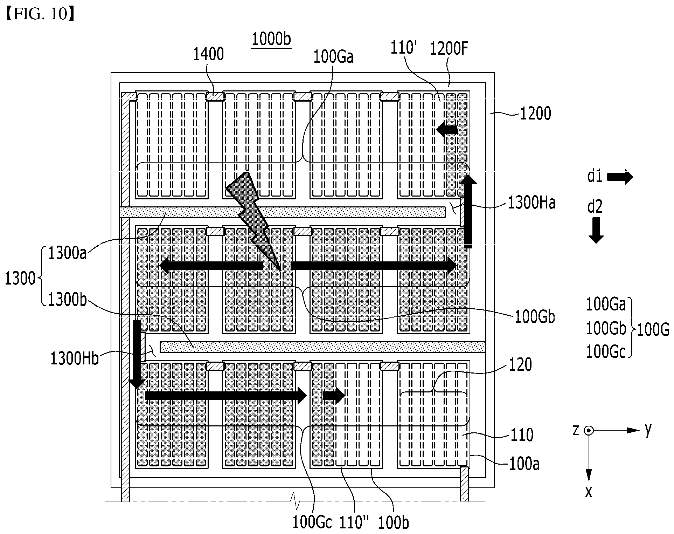

Fig. 10 is a plan view which schematically illustrates a state in which a thermal runaway phenomenon occurs in any one of the battery cells in the battery pack of Fig. 9.

Referring to Figs. 3, 9 and 10, a thermal runaway phenomenon may occur in any one of the battery cells 110 included in the battery pack 1000b according to the present embodiment. In one example, the thermal runaway phenomenon may occur in one of the battery cells included in the battery module of the second battery module group 100Gb.

The thermal runaway phenomenon occurring in any one battery cell may be expanded to other battery cells due to the effect of heat transfer, that is, conduction, convection, radiation, and the like, and further may be expanded to other battery modules. Particularly, due to the structure of the battery pack in which the battery modules are densely packed to increase the space utilization rate, the thermal runaway may occur simultaneously and frequently in several densely packed battery modules, rather than sequentially propagating the thermal runaway to the battery modules. That is, the thermal runaway phenomenon that starts from a battery cell and simultaneously and frequently expands to several battery modules leads to ignition and explosion of the battery pack itself, which is a serious problem.

However, in the battery pack 1000b according to the present embodiment, the first partition wall member 1300a and the second partition wall member 1300b are arranged between the first to third battery module groups 100Ga, 100Gb and 100Gc, and the battery modules 100a and 100b are arranged in a row within the first to third battery module groups 100Ga, 100Gb and 100Gc, so that the propagation of the thermal runaway phenomenon is sequentially performed not only in units of the battery modules 100a and 100b but also in units of the battery cell 110. In particular, it is designed so that the propagation path of the thermal runaway phenomenon coincides with the HV connection line formed through the connection member 1400.

As shown in Fig. 10, when a thermal runaway phenomenon occurs in any one of the battery cells, the venting gas and heat may be sequentially propagated to the adjacent battery cells 110. In one example, Fig. 10 shows the state in which the thermal runaway phenomenon is propagated to the battery cells 110' of the first battery module group 100Ga and the battery cells 110" of the third battery module group 100Gc.

Further, the venting gas and heat cannot be immediately propagated to the first battery module group 100Ga or the third battery module group 100Gc by the first partition wall member 1300a and the second partition wall member 1300b, and the venting gas and heat can be propagated through the first opening 1300Ha and the second opening 1300Hb. In the present embodiment, the heat insulation structure is designed so that the thermal runaway phenomenon does not propagate beyond the HV connection order of the connection member 1400 between the first to third battery module groups 100Ga, 100Gb, and 100Gc. In particular, even if a plurality of battery modules 100a and 100b are arranged in a row by the first partition wall member 1300a in which the first opening 1300Ha is formed and the second partition wall member 1300b in which the second opening 1300Hb is formed, it is possible to create a thermal runaway phenomenon propagation path that connects in a row.

By designing such that sequential propagation is performed in this way, it is possible to increase the time for venting gas and heat to propagate, and in the process of sequential propagation, the intensity of thermal runaway can gradually decrease. That is, the battery pack 1000b according to the present embodiment can prevent the battery pack 1000b from leading to ignition or explosion even if a thermal runaway phenomenon occurs in any one of the battery cells 110. If there is no partition wall member 1300, the thermal runaway phenomenon started in one battery cell 110 is immediately propagated to the battery modules in the other first battery module group 100Ga or the third battery module group 100Gc, and a large amount of venting gas and high-temperature heat may be discharged from various battery modules for a short period of time. This is highly likely to lead to ignition and explosion of the battery pack 1000b.

Meanwhile, as described above, according to the present embodiment, within the battery module group 100Ga and 100Gb, the direction in which the battery modules 100a are arranged and the direction in which the battery cells 110 are stacked may coincide with each other. hereby, within the battery module group 100Ga and 100Gb, the propagation of the thermal runaway phenomenon between the battery cells 110 can also be sequentially performed. By allowing the arrangement direction of the battery modules 100a and the stacking direction of the battery cells 110 to coincide, an attempt was made to further delay the propagation of the thermal runaway phenomenon.

On the other hand, the partition wall member 1300 in the present disclosure described above has a structure that can control the effects of conduction, convection, radiation, or the like of heat transfer, and perform the function to prevent the expansion of heat transfer. Based on this, the partition wall member 1300 may include a heat insulator to prevent conduction, and may include a thin metal plate in order to prevent venting gas.

Although the terms representing directions such as front, rear, left, right, upper and lower directions are used herein, it would be obvious to those skilled in the art that these merely represent for convenience of explanation, and may differ depending on a position of an object, a position of an observer, or the like.

The above-mentioned battery pack according to the present embodiment may include not only a battery module but also various control and protection systems such as BMS (battery management system), BDU(battery disconnect unit), and a cooling system.

The battery pack can be applied to various devices. Specifically, such a device can be applied to a vehicle means such as an electric bicycle, an electric vehicle, or a hybrid vehicle, or ESS (energy storage system), but the present disclosure is not limited thereto, and is applicable to various devices that can use a secondary battery.

Although preferred embodiments of the present disclosure have been described in detail above, the scope of the present disclosure is not limited thereto, and various modifications and improvements made by those skilled in the art using the basic concepts of the present disclosure, which are defined in the appended claims, also belong to the scope of the present disclosure.

### [Description of Reference Numerals]

1000a, 1000b: battery pack
100a, 100b: battery module
100Ga, 100Gb, 100Gc: battery module group
1300: partition wall member

## Claims

1. A battery pack comprising:
battery modules including a plurality of battery cells; and
a pack frame for housing the battery modules,
wherein within the pack frame, the battery modules are arranged in a multiple row and single layer structure,
wherein at least two of the battery modules are arranged in a row along the first direction to form battery module groups,
wherein a partition wall member is located between any one battery module group and another battery module group, and
wherein the partition wall member extends along the first direction.

2. The battery pack of claim 1, wherein:
the battery cells are stacked along the first direction while one surface of the cell body of the battery cell stands upright so as to be perpendicular to one surface of the bottom part of the pack frame.

3. The battery pack of claim 1, wherein:
the battery cell is a pouch-type battery cell.

4. The battery pack of claim 1,
which further comprises a connection member that connects the nay one battery module group and the another battery module group.

5. The battery pack of claim 4, wherein:
a space in which the connection member is located is provided on one side or both sides of the partition wall member, and
a sealing member is arranged in the space where the connection member is located.

6. The battery pack of claim 1, wherein:
the battery module group comprises a first battery module group, a second battery module group and a third battery module group, and
within each of the first battery module group, the second battery module group and the third battery module group, the battery modules are arranged in a row along the first direction.

7. The battery pack of claim 6, wherein:
within the pack frame, the first battery module group, the second battery module group and the third battery module group are arranged along a second direction perpendicular to the first direction.

8. The battery pack of claim 7, wherein:
the partition wall member comprises a first partition wall member and a second partition wall member,
wherein the first partition wall member is located between the first battery module group and the second battery module group, and
the second partition wall member is located between the second battery module group and the third battery module group.

9. The battery pack of claim 8, wherein:
a first opening for connecting a space of the first battery module group and a space of the second battery module group is formed on one side of the first partition wall member, and
a second opening for connecting a space of the second battery module group and a space of the third battery module group is formed on one side of the second partition wall member.

10. The battery pack of claim 9, wherein:
the first opening and the second opening are located on opposite sides to each other with respect to the first direction.

11. The battery pack of claim 1, wherein:
due to the partition wall member, any one battery module faces one or two battery modules.

12. A device comprising the battery pack of claim 1.
